# FASCICULE DE BREVET EUROPEEN

(11) **EP 4 616 506 B1**
(45) Date de publication et mention de la délivrance du brevet: **02.12.2026**
(21) Numéro de dépôt: 23793884.0
(22) Date de dépôt: 24.10.2023
(51) Int. Cl.: H02J 1/00, H02J 1/10, H02J 3/38

(54) **SYSTÈME DE GÉNÉRATION ÉLECTRIQUE POUR UN AÉRONEF ET PROCÉDÉ ASSOCIÉ**
STROMERZEUGUNGSSYSTEM FÜR EIN FLUGZEUG UND ZUGEHÖRIGES VERFAHREN
ELECTRICAL GENERATION SYSTEM FOR AN AIRCRAFT, AND ASSOCIATED METHOD

(30) Priorité: 08.11.2022 FR 2211607
(43) Date de publication de la demande: 17.09.2025
(73) Titulaire: SAFRAN, 75015 Paris (FR); Safran Electrical & Power, 31702 Blagnac (FR)
(72) Inventeur: BEGGIORA, Geoffrey, 77550 MOISSY-CRAMAYEL (FR); ROUGIER, Florent Jean-Arnaud, 77550 MOISSY-CRAMAYEL (FR); BIDAN, Guillaume François Daniel, 77550 MOISSY-CRAMAYEL (FR); LIENHARDT, Anne Marie, 77550 MOISSY-CRAMAYEL (FR)
(74) Mandataire: Argyma
(86) Numéro de dépôt international: PCT/EP2023/079616
(87) Numéro de publication internationale: WO 2024/099764

(56) Documents cités:
- US-A1- 2016 359 324
- US-A1- 2018 291 807
- US-A1- 2021 380 264
- US-B2- 11 078 850

## Description

### Domaine technique

La présente invention concerne un système de génération électrique pour un aéronef et, plus généralement, un système d'hybridation électrique pour un aéronef.

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'aéronefs mais aussi à ceux en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des aéronefs. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des aéronefs.

Ces travaux de recherche et de développement soutenus portent notamment sur de nouvelles générations de moteurs d'aéronef hybrides thermiques et électriques. L'objectif de la Déposante est notamment de développer des aéronefs intégrant un système de génération électrique de forte puissance. Ceci permettrait d'augmenter la part des équipements électriques à bord afin de réduire la consommation de carburant.

En pratique, dans une turbomachine d'aéronef classique, il est connu d'intégrer un générateur électrique qui prélève de l'énergie mécanique sur l'arbre basse pression de la turbomachine d'aéronef pour produire de l'énergie électrique qui est distribuée à une unité de distribution d'énergie électrique.

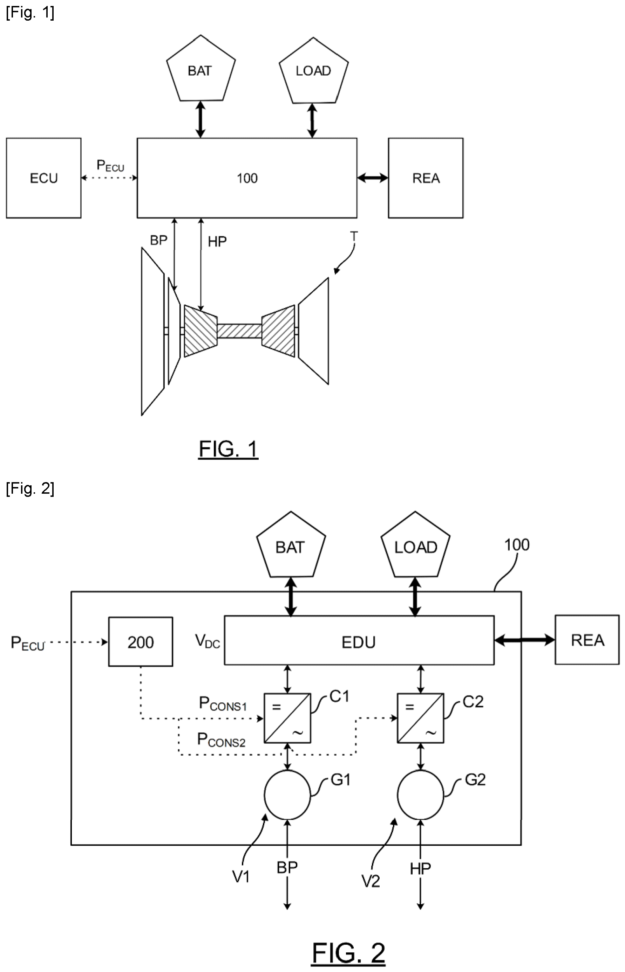

Pour augmenter la génération d'énergie électrique, en référence à la [Fig.1], il a été proposé un système de génération électrique 100 configuré pour prélever, d'une part, de l'énergie mécanique sur un arbre basse pression BP et, d'autre part, de l'énergie mécanique sur un arbre haute pression HP d'une turbomachine d'aéronef T pour alimenter un réseau électrique de l'aéronef REA avec une tension de distribution calibrée. Autrement dit, le système de génération électrique 100 comporte au moins deux voies d'alimentation, ici, une voie BP et une voie HP. Le système de génération électrique 100 peut être par ailleurs relié à des sources électriques BAT ou des charges électriques LOAD.

En pratique, le système de génération électrique 100 est configuré pour recevoir une consigne de génération P_{ECU} issue d'un calculateur ECU de la turbomachine T. Cette consigne de génération P_{ECU} permet de déterminer, par exemple, la quantité de puissance électrique à générer, le prélèvement mécanique sur chaque arbre, etc. Autrement dit, la consigne de génération P_{ECU} permet de déterminer la stratégie d'hybridation retenue.

En référence à la [Fig.2], le système de génération électrique 100 comporte deux génératrices G1, G2 reliées respectivement à l'arbre basse pression BP et à l'arbre haute pression HP de la turbomachine T. Le système de génération électrique 100 comporte en outre deux convertisseurs C1, C2, en particulier des onduleurs, qui sont respectivement associés aux deux génératrice G1, G2. Chaque génératrice G1, G2 génère un courant alternatif qui est ensuite redressé par son convertisseur C1, C2 pour fournir une tension de distribution V_{DC} à une unité de distribution électrique EDU qui est reliée électriquement au réseau électrique de l'aéronef REA, aux sources électriques BAT ou aux charges électriques LOAD.

Il est présenté dans cet exemple une application liée à la génération électrique mais l'invention s'applique plus généralement au domaine de l'hybridation dans lequel une machine électrique remplit, d'une part, une fonction de générateur pour prélever de la puissance mécanique sur l'arbre basse pression BP ou sur l'arbre haute pression HP et, d'autre part, une fonction de moteur pour injecter de la puissance mécanique sur l'arbre basse pression BP ou sur l'arbre haute pression HP. Pour une fonction moteur, chaque convertisseur C1, C2 peut également convertir la tension continue V_{DC} pour alimenter en courant alternatif respectivement les deux machines électriques G1, G2 afin d'injecter de la puissance.

Par souci de clarté et de concision, il n'est présenté que la fonction génératrice. Pour une fonction moteur, le calculateur ECU fournit une consigne d'injection P_{ECU} permettant de déterminer, par exemple, l'injection de puissance mécanique sur chaque arbre, etc. Le système d'hybridation est bidirectionnel pour permettre la génération de puissance électrique mais également l'injection de puissance mécanique.

De manière connue, chaque convertisseur C1, C2 comporte une pluralité d'interrupteurs, en particulier des transistors de puissance, qui permettent de modifier la puissance électrique générée et la puissance électrique prélevée par chaque génératrice G1, G2 sur chaque arbre BP, HP. Le système de génération électrique 100 comporte un dispositif de contrôle 200 pour émettre des consignes de paramétrage P _{CONS1}, P_{CONS2} à chaque convertisseur C1, C2 en fonction de la consigne de génération P _{ECU} de manière à obtenir une tension de distribution V_{DC} qui soit adaptée à l'unité de distribution électrique EDU.

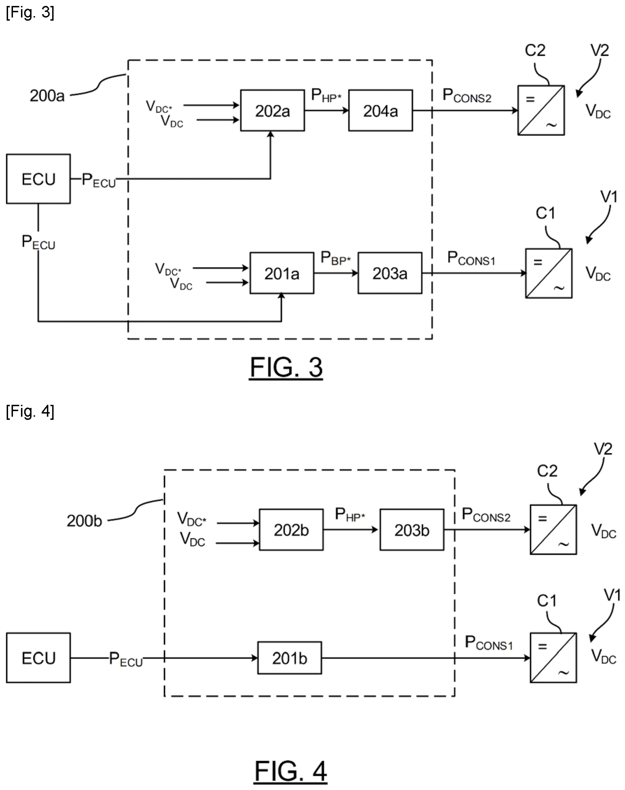

Dans l'art antérieur, en référence aux figures 3 à 5, on connaît plusieurs dispositifs de contrôle 200a, 200b, 200c pour fournir les consignes de paramétrage P_{CONS1}, P_{CONS2}aux convertisseurs C1, C2 de chaque voie d'alimentation V1, V2.

En référence à la [Fig.3], il est connu un dispositif de contrôle 200a comprenant une première unité de régulation 201a et une deuxième unité de régulation 202a qui fournissent respectivement des consignes de puissance P_{BP*}, P_{HP*}à une première unité de traitement 203a et à une deuxième unité de traitement 204a en fonction de la consigne de génération P_{ECU}. Ainsi, chaque unité de régulation 201a, 202a permet de mettre en œuvre de manière indépendant la stratégie d'hybridation déterminée par la consigne de génération P_{ECU}. La première unité de traitement 203a et la deuxième unité de traitement 204a fournissent respectivement les consignes de paramétrage P_{CONS1}, P _{CONS2} au premier convertisseur C1 et au deuxième convertisseur C2 à partir des consignes de puissance P_{BP*}, P_{HP*}. Dans cet exemple, chaque unité de régulation 201a, 202a réalise une régulation indépendante pour chaque convertisseur C1, C2 en comparant la tension de distribution V_{DC} à une consigne de tension de distribution V_{DC*} tout en tenant compte de la consigne de génération P_{ECU}. Dans cet exemple, les voies d'alimentation V1, V2 sont symétriques.

Bien que cette architecture « décentralisée » soit simple et robuste, elle présente l'inconvénient d'engendrer une erreur statique non nulle. Ainsi, la tension de distribution V_{DC} fournie à l'unité de distribution électrique EDU dépend du niveau de charge de l'unité de distribution électrique EDU, ce qui nécessite des gabarits qui couvrent une large plage de variation. Cela augmente le coût et la complexité de l'unité de distribution électrique EDU. En outre, une telle régulation est très dépendante de la mesure de la tension de distribution V_{DC}, ce qui impose une grande précision de la chaine d'acquisition de la mesure de la tension de distribution V_{DC}. Cela augmente encore le coût et la complexité.

En référence à la [Fig.4], il est également connu un dispositif de contrôle 200b comprenant une unité de partage 201b qui fournit une première consigne de paramétrage P_{CONS1}au premier convertisseur C1 en fonction de la consigne de génération P_{ECU}. De manière analogue à la [Fig.3], le dispositif de contrôle 200b comporte une unité de régulation 202b et une unité de traitement 203b. L'unité de régulation 202b réalise une régulation indépendante en comparant une mesure de la tension de distribution V_{DC} à une consigne de tension de distribution V_{DC*}pour fournir une consigne de puissance P_{HP*}. L'unité de traitement 203b fournit la consigne de paramétrage P_{CONS2} au deuxième convertisseur C2 en fonction de la consigne de puissance P_{HP*}. Dans cet exemple, les voies d'alimentation V1, V2 sont asymétriques.

Cette autre architecture « décentralisée » présente l'avantage d'assurer une indépendance entre, d'une part, l'unité de partage 201b et, d'autre part, l'unité de régulation 202b et l'unité de traitement 203b. Néanmoins, une telle architecture est peu robuste en cas de perte de l'unité de régulation 202b et/ou de l'unité de traitement 203b.L'unité de partage 201b peut se reconfigurer sur un temps « électriquement » long, qui peut engendrer une coupure partielle de l'alimentation. En outre, l'unité de partage 201b doit recevoir en permanence une consigne de génération P_{ECU} pour pouvoir fonctionner.

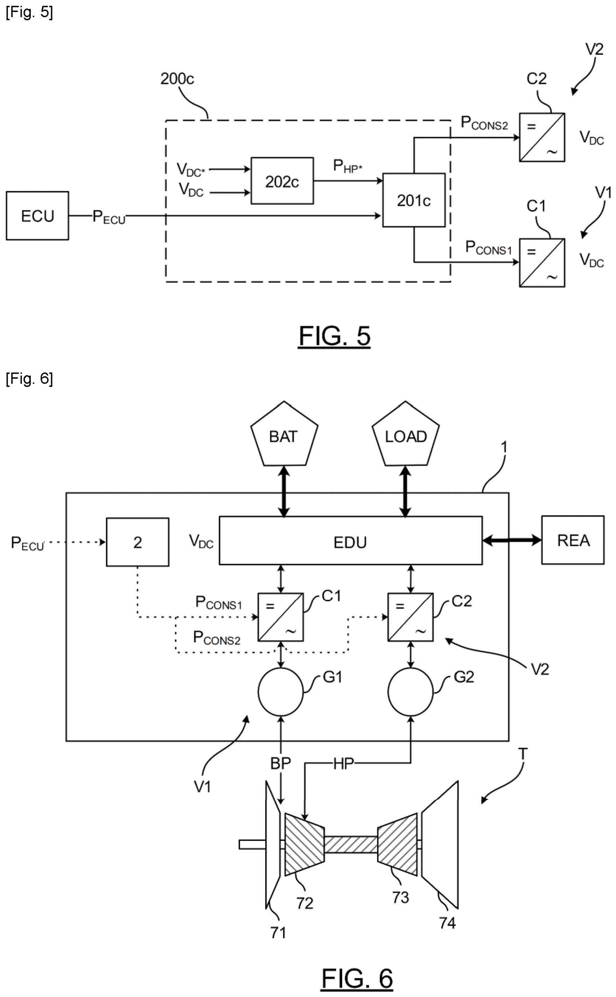

En référence à la [Fig.5], il est également connu un dispositif de contrôle 200c comprenant une unité de régulation 202c qui compare une mesure de la tension de distribution V_{DC} à une consigne de tension de distribution V_{DC*}pour fournir une consigne de puissance P_{HP*}. Le dispositif de contrôle 200c comprend une unité de partage 201c qui fournit les consignes de paramétrage P_{CONS1}, P_{CONS2} aux convertisseurs C1, C2 en fonction de la consigne de génération P_{ECU} et de la consigne de puissance P_{HP*}. Dans cet exemple, les voies d'alimentation V1, V2 sont symétriques.

Cette architecture « centralisée » présente l'avantage d'être robuste en cas de perte de l'unité de régulation 202c ou de fonctionnement partiel de l'unité de partage 201c. Une telle architecture présente l'inconvénient de nécessiter une communication rapide, supérieure à 10kHz, entre l'unité de régulation 202c et l'unité de partage 201c pour transmettre la consigne de puissance P_{HP*}. Pour atteindre ce but, il est nécessaire de prévoir une unité de calcul dédiée pour assurer la transmission de la consigne de puissance P_{HP*} entre l'unité de régulation 202c (côté génération HP) et l'unité de partage 201c (côté génération BP), ce qui augmente les besoins en calcul et augmente le coût.

L'invention vise à proposer un système de génération électrique qui élimine au moins certains de ces inconvénients.

US20180291807A1 et US2021380264A1 enseignent un système et une méthode pour allouer de la puissance électrique à un aéronef.

### PRESENTATION DE L'INVENTION

L'invention concerne un système de génération électrique pour alimenter au moins un réseau électrique d'un aéronef, l'aéronef comprenant au moins une turbomachine d'aéronef comprenant un arbre basse pression et un arbre haute pression configurés pour être entraînés en rotation, le système de génération électrique étant configuré pour recevoir une consigne de génération définissant une stratégie d'hybridation, le système de génération électrique comprenant :
- Une première voie d'alimentation comprenant :
   - Une première génératrice configurée pour générer un courant alternatif en prélevant de l'énergie mécanique sur un des arbres basse pression et haute pression,
   - Un premier convertisseur, associé à la première génératrice, pour convertir le courant alternatif généré en une première intensité de distribution en fonction de son paramétrage, le premier convertisseur générant une première puissance qui est fonction d'une tension de distribution,
- Une deuxième voie d'alimentation comprenant :
   - Une deuxième génératrice configurée pour générer un courant alternatif en prélevant de l'énergie mécanique sur l'autre des arbres basse pression et haute pression,
   - Un deuxième convertisseur, associé à la deuxième génératrice, pour convertir le courant alternatif généré en une deuxième intensité de distribution en fonction de son paramétrage, le deuxième convertisseur générant une deuxième puissance qui est fonction de la tension de distribution,
- Un dispositif de contrôle configuré pour déterminer une première consigne de paramétrage pour le premier convertisseur et une deuxième consigne de paramétrage pour le deuxième convertisseur, le dispositif de contrôle comprenant :
   - Une première unité de traitement configurée pour déterminer une première consigne de paramétrage pour le premier convertisseur à partir d'une première consigne de puissance,
   - Une deuxième unité de traitement configurée pour déterminer une deuxième consigne de paramétrage pour le deuxième convertisseur à partir d'une deuxième consigne de puissance,
   - Une première unité de régulation configurée pour déterminer une première cible de puissance en fonction d'une consigne de tension de distribution et d'une mesure de la tension de distribution,
   - Une deuxième unité de régulation configurée pour déterminer la deuxième consigne de puissance en fonction de la consigne de tension de distribution et de la mesure de la tension de distribution,
   - Une unité d'hybridation configurée pour déterminer une deuxième cible de puissance à partir d'une mesure de la première puissance, d'une mesure de la deuxième puissance et de la consigne de génération,
   - Une unité de sélection configurée pour sélectionner par défaut la deuxième cible de puissance comme première consigne de puissance et pour sélectionner la première cible de puissance comme première consigne de puissance en cas de dysfonctionnement de l'alimentation électrique par le deuxième convertisseur.

De manière avantageuse, la deuxième cible de puissance correspond à une cible de puissance par défaut qui permet de respecter la stratégie d'hybridation. La première cible de puissance est déterminée par la régulation de tension et correspond à une cible de secours lorsque la stratégie d'hybridation ne peut plus être respectée. De manière avantageuse, la deuxième cible de puissance peut être transmise par une ligne de communication lente, la première cible de puissance pouvant prendre le relais de manière réactive en cas de dysfonctionnement.

Selon un aspect de l'invention, le système de génération électrique comprend au moins un bloc de détermination configuré pour déterminer la première puissance et la deuxième puissance à partir de la mesure de la première intensité de distribution, de la mesure de la deuxième intensité de distribution et de la mesure de la tension de distribution. Les intensités de distribution peuvent être mesurées de manière simple et réactive en sortie des convertisseurs, ce qui permet de déterminer la deuxième cible de puissance de manière fiable. La stratégie d'hybridation est ainsi respectée de manière scrupuleuse.

Selon un aspect de l'invention, la consigne de génération définit au moins un ratio de la première puissance sur la puissance totale générée. Un partage de puissance précis peut ainsi être réalisé conformément à la stratégie d'hybridation.

De préférence, l'unité d'hybridation est configurée pour déterminer la deuxième cible de puissance en boucle fermée. Cela permet avantageusement de garantir un partage en puissance précis entre les convertisseurs.

Selon un aspect, le système de génération électrique comprend au moins une unité de distribution électrique alimentée par les convertisseurs à la tension de distribution. L'unité de distribution se présente de préférence sous la forme d'un bus.

Selon un aspect préféré, l'unité d'hybridation appartient à l'unité de distribution électrique. Ainsi, l'unité d'hybridation peut partager les ressources de calcul de l'unité de distribution. Il n'est pas nécessaire d'utiliser un calculateur supplémentaire. De préférence, le bloc de détermination appartient à l'unité de distribution électrique. De préférence encore, l'unité de distribution électrique est configurée pour déterminer la consigne de génération.

Selon un aspect de l'invention, le système de génération électrique comprend :
- Au moins une troisième voie d'alimentation comprenant au moins un troisième convertisseur, alimenté par une troisième source électrique, pour générer une troisième intensité de distribution en fonction de son paramétrage, le troisième convertisseur générant une troisième puissance qui est fonction de la tension de distribution,
- l'unité d'hybridation étant configurée pour déterminer la deuxième cible de puissance à partir d'une mesure de la première puissance, d'une mesure de la deuxième puissance, d'une mesure de la troisième puissance et de la consigne de génération.

Selon un aspect, l'unité de sélection est configurée pour sélectionner par défaut la deuxième cible de puissance comme première consigne de puissance et pour sélectionner la première cible de puissance comme première consigne de puissance en cas de dysfonctionnement de l'alimentation électrique par le deuxième convertisseur et/ou le troisième convertisseur.

De préférence, le troisième convertisseur est associé à une batterie électrique. Le troisième convertisseur est de préférence du type continu/continu.

De manière préférée, chaque génératrice se présente sous la forme d'une machine électrique configurée pour injecter de l'énergie mécanique sur un des arbres basse pression et haute pression (fonction moteur). Le convertisseur, associé à la génératrice, est un convertisseur bidirectionnel.

L'invention concerne également un procédé de génération électrique pour alimenter au moins un réseau électrique d'un aéronef à partir d'un système de génération électrique tel que présenté précédemment, l'aéronef comprenant au moins une turbomachine d'aéronef comprenant un arbre basse pression et un arbre haute pression configurés pour être entraînés en rotation, le procédé comportant des étapes consistant à :
- Recevoir une consigne de génération définissant une stratégie d'hybridation,
- Déterminer une première consigne de paramétrage pour le premier convertisseur à partir d'une première consigne de puissance,
- Déterminer une deuxième consigne de paramétrage pour le deuxième convertisseur à partir d'une deuxième consigne de puissance,
- Déterminer une première cible de puissance en fonction d'une consigne de tension de distribution et d'une mesure de la tension de distribution,
- Déterminer la deuxième consigne de puissance en fonction de la consigne de tension de distribution et de la mesure de la tension de distribution,
- Déterminer une deuxième cible de puissance à partir d'une mesure de la première puissance, d'une mesure de la deuxième puissance et de la consigne de génération,
- Sélectionner par défaut la deuxième cible de puissance comme première consigne de puissance et sélectionner la première cible de puissance comme première consigne de puissance en cas de dysfonctionnement de l'alimentation électrique par le deuxième convertisseur.

L'invention concerne également un produit de type programme d'ordinateur, comprenant au moins une séquence d'instructions stockée et lisible par un processeur et qui, une fois lue par ce processeur, provoque la réalisation des étapes du procédé tel que présenté précédemment.

L'invention concerne en outre un support lisible par un ordinateur comportant le produit de type programme d'ordinateur tel que présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un système de génération électrique prélevant de l'énergie mécanique sur une turbomachine d'aéronef.
La [Fig.2] est une représentation schématique du système de génération électrique avec ses génératrices, ses convertisseurs, une unité de distribution électrique et un dispositif de contrôle.
La [Fig.3] est une représentation schématique d'une première forme de réalisation d'un dispositif de contrôle.
La [Fig.4] est une représentation schématique d'une deuxième forme de réalisation d'un dispositif de contrôle.
La [Fig.5] est une représentation schématique d'une troisième forme de réalisation d'un dispositif de contrôle.
La [Fig.6] est une représentation schématique d'un système de génération électrique selon l'invention.
La [Fig.7] est une représentation schématique d'une première forme de réalisation du système de génération.
La [Fig.8] est une représentation schématique d'une deuxième forme de réalisation du système de génération.
La [Fig.9] est une représentation schématique d'une troisième forme de réalisation du système de génération.
La [Fig.10] est une représentation schématique du module de contrôle de la [Fig.9].
La [Fig.11] est une représentation schématique d'une unité de distribution électrique intégrant une unité d'hybridation.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

En référence à la [Fig.6], il est représenté un système de génération électrique 1 pour un aéronef. L'aéronef comprend une turbomachine T comprenant un arbre basse pression BP et un arbre haute pression HP. Dans cet exemple, la turbomachine T comporte un compresseur basse pression 71 et une turbine basse pression 74 qui sont reliées par l'arbre basse pression BP et un compresseur haute pression 72 et une turbine haute pression 73 qui sont reliées par l'arbre haute pression HP.

Le système de génération électrique 1 est configuré pour prélever, d'une part, de l'énergie mécanique sur l'arbre basse pression BP et, d'autre part, de l'énergie mécanique sur l'arbre haute pression HP pour alimenter un réseau électrique de l'aéronef REA avec une tension calibrée. Le système de génération électrique 1 peut être par ailleurs relié à des sources électriques BAT ou des équipements électriques à alimenter LOAD.

En pratique, comme cela sera présenté par la suite, le système de génération électrique permet plus généralement une hybridation électrique pour permettre de prélever ou d'injecter de la puissance à la turbomachine T.

Le système de génération électrique 1 est configuré pour recevoir une consigne de génération P_{ECU} issue d'un calculateur ECU de la turbomachine T. Cette consigne de génération P_{ECU} permet de déterminer, par exemple, la quantité de puissance électrique à générer, le prélèvement mécanique sur chaque arbre, etc. Autrement dit, la consigne de génération P_{ECU} permet de déterminer la stratégie d'hybridation retenue. En pratique, la consigne de génération P_{ECU} se présente sous la forme d'une consigne de puissance dite « Setpoint PS » ou d'une consigne de partage de puissance dite « Mode PS ».

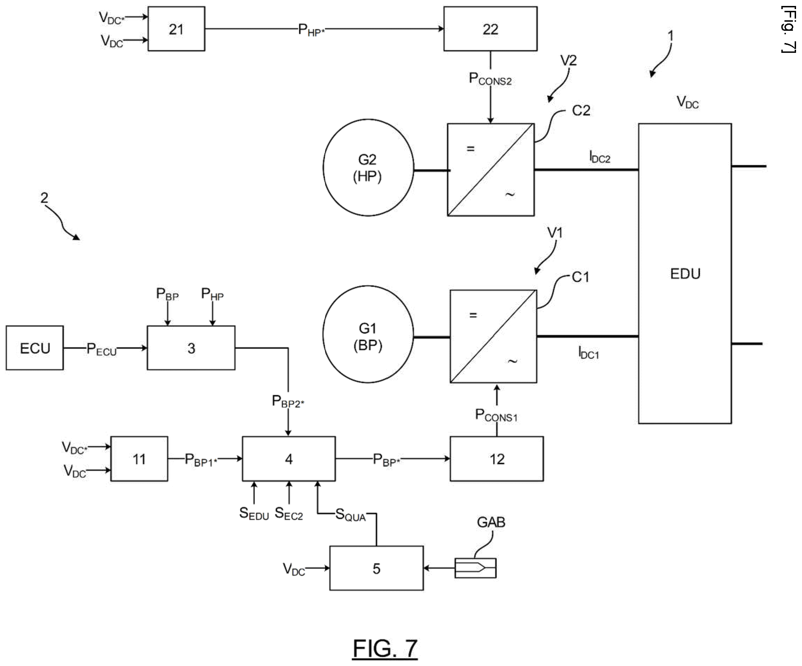

En référence aux figures 6 et 7, le système de génération électrique 1 comporte deux génératrices G1, G2 reliées respectivement à l'arbre basse pression BP et à l'arbre haute pression HP de la turbomachine T. Le système de génération électrique 1 comporte :
- Une première voie d'alimentation V1 comprenant :
   - Une première génératrice G1 configurée pour générer un courant alternatif en prélevant de l'énergie mécanique sur l'arbre basse pression BP,
   - Un premier convertisseur C1, associé à la première génératrice G1, pour convertir le courant alternatif généré en une première intensité de distribution I_{DC1} en fonction de son paramétrage, le premier convertisseur C1 générant une première puissance P_{BP} qui est fonction d'une tension de distribution V_{DC},
- Une deuxième voie d'alimentation V2 comprenant :
   - Une deuxième génératrice G2 configurée pour générer un courant alternatif en prélevant de l'énergie mécanique sur l'arbre haute pression HP,
   - Un deuxième convertisseur C2, associé à la deuxième génératrice G2, pour convertir le courant alternatif généré en une deuxième intensité de distribution I_{DC2} en fonction de son paramétrage, le deuxième convertisseur C2 générant une deuxième puissance P_{HP} qui est fonction de la tension de distribution V_{DC}.

Dans cet exemple, la première voie d'alimentation V1 est associée à un prélèvement de puissance sur un arbre basse pression BP tandis que la deuxième voie d'alimentation V2 est associée à un prélèvement de puissance sur un arbre haute pression HP. Il va de soi que l'inverse est également possible.

Dans cet exemple, les génératrices G1, G2 sont de préférence des machines électriques capables de fonctionner selon un mode générateur un ou mode moteur. De manière connue, chaque machine électrique comporte un rotor solidaire d'un arbre tournant (ici un arbre BP ou un arbre HP) et un stator comportant des enroulements de manière à générer des courants alternatifs triphasés. De manière préférée, la vitesse w et la position angulaire θ de chaque génératrice G1, G2 sont disponibles. La structure et le fonctionnement d'une telle machine électrique sont connus et ne seront pas présentés plus en détails.

En référence à la [Fig.6], le système de génération électrique 1 comporte une unité de distribution électrique EDU qui est reliée électriquement au réseau électrique de l'aéronef REA, aux sources électriques BAT ou aux charges électriques LOAD.

Chaque convertisseur C1, C2 peut fournir une tension de distribution V_{DC} à l'unité de distribution électrique EDU. De préférence, l'unité de distribution électrique EDU comporte un bus de tension.

De manière connue, chaque convertisseur C1, C2 comporte une pluralité d'interrupteurs, en particulier des transistors, qui permettent de modifier la puissance électrique générée et la puissance mécanique prélevée sur chaque arbre BP, HP pour adapter l'intensité de distribution I_{DC1}, I_{DC2} en fonction des besoins.

Selon l'invention, en référence à la [Fig.6], le système de génération électrique 1 comporte un dispositif de contrôle 2 configuré pour déterminer une première consigne de paramétrage P_{CONS1} pour le premier convertisseur C1 et une deuxième consigne de paramétrage P_{CONS2} pour le deuxième convertisseur C2.

De manière préférée, chaque consigne de paramétrage P_{CONS1}, P_{CONS2}se présente sous la forme d'un signal de modulation de largeur d'impulsion (MLI). Une telle consigne de paramétrage P_{CONS1}, P_{CONS2} permet de commander la commutation des transistors des convertisseurs C1, C2.

En référence à la [Fig.7], le dispositif de contrôle 2 comprend une première unité de traitement 12 configurée pour déterminer une première consigne de paramétrage P_{CONS1} pour le premier convertisseur C1 à partir d'une première consigne de puissance P_{BP*}. De plus, le dispositif de contrôle 2 comprend une première unité de régulation 11 configurée pour déterminer une première cible de puissance P_{BP1*} en fonction d'une consigne de tension de distribution V_{DC*} et d'une mesure de la tension de distribution V _{DC}.

Comme illustré à la [Fig.7], la première unité de régulation 11 met en œuvre une boucle de régulation avec une erreur statique nulle à l'aide d'un correcteur, par exemple, du type proportionnel-intégral PI, afin de déterminer une première cible de puissance P_{BP1*}en fonction de la consigne de tension de distribution V_{DC*} et de la mesure de la tension de distribution V_{DC}. En pratique, la première cible de puissance P _{BP1*} est déterminée de manière analogue à l'art antérieur.

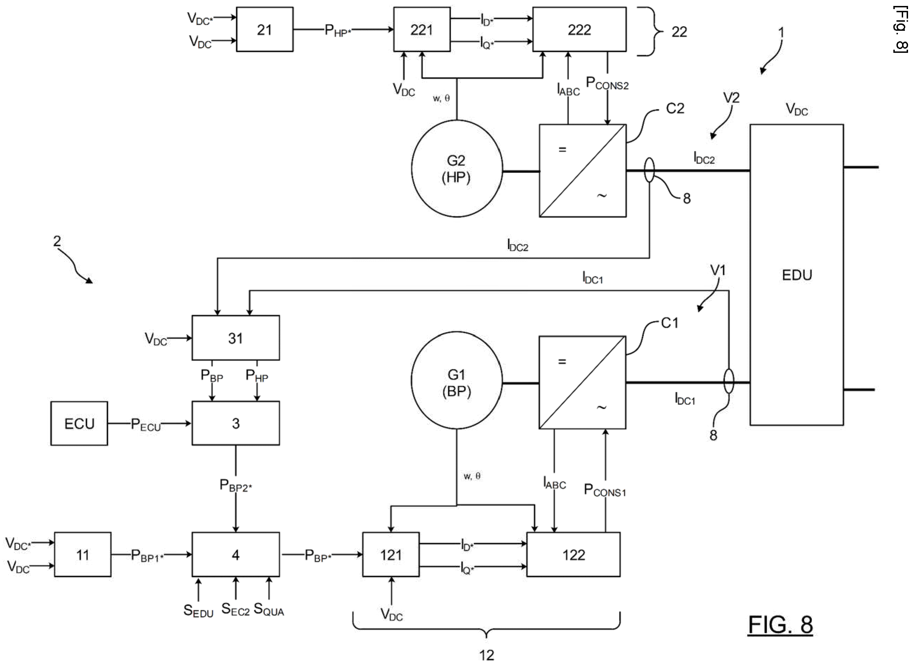

Selon un aspect, en référence à la [Fig.8], la première unité de traitement 12 comporte un premier bloc 121 mettant en œuvre un algorithme transformant la première consigne de puissance P_{BP*} en deux consignes de courants I_{D}*/I_{Q}* tout en tenant compte de la vitesse w et de la position angulaire θ de la première génératrice G1 et de la mesure de la tension de distribution V_{DC}.

Toujours en référence à la [Fig.8], la première unité de traitement 12 comporte en outre un deuxième bloc 122 mettant en œuvre une boucle de courant configurée pour définir la première consigne de paramétrage P_{CONS1} du premier convertisseur C1 à partir d'une mesure des courants triphasés I_{ABC} dans le premier convertisseur C1, de la position angulaire θ de la première génératrice électrique G1 et des consignes de courants I_{D}*/I_{Q}* issus du premier bloc 121.

Une telle unité de régulation et une telle unité de traitement sont connues de l'homme du métier et ne seront pas présentées plus en détails.

Selon l'invention, toujours en référence à la [Fig.7], le dispositif de contrôle 2 comprend une deuxième unité de traitement 22 configurée pour déterminer une deuxième consigne de paramétrage P_{CONS2} pour le deuxième convertisseur C2 à partir d'une deuxième consigne de puissance P_{HP*}.

De manière analogue à la voie BP, le dispositif de contrôle 2 comprend une deuxième unité de régulation 21 configurée pour déterminer une deuxième consigne de puissance P_{HP*} en fonction de la consigne de tension de distribution V_{DC*} et d'une mesure de la tension de distribution V_{DC}.

Comme illustré à la [Fig.7], de manière analogue à la voie BP, la deuxième unité de régulation 21 met en œuvre une boucle de régulation avec une erreur statique nulle à l'aide d'un correcteur, par exemple, du type proportionnel-intégral (PI), afin de déterminer une deuxième consigne de puissance P_{HP*}en fonction de la consigne de tension de distribution V_{DC*} et de la mesure de la tension de distribution V_{DC}. En pratique, la deuxième consigne de puissance P_{HP*} est déterminée de manière analogue à l'art antérieur.

De manière analogue, en référence à la [Fig.8], la deuxième unité de traitement 22 comporte un premier bloc 221 mettant en œuvre un algorithme transformant la deuxième consigne de puissance P_{HP*} en deux consignes de courants I_{D}*/I_{Q}* tout en tenant compte de la vitesse w et de la position angulaire θ de la deuxième génératrice G2 et de la mesure de la tension de distribution V_{DC}.

La deuxième unité de traitement 22 comporte en outre un deuxième bloc 222 mettant en œuvre une boucle de courant configurée pour définir la deuxième consigne de paramétrage P_{CONS2} du premier convertisseur C2 à partir d'une mesure des courants triphasés I_{ABC} dans le deuxième convertisseur C2, de la position angulaire θ de la deuxième génératrice électrique G2 et des consignes de courants I_{D}*/I_{Q}* issus du premier bloc 221.

Selon l'invention, en référence à la [Fig.7], le dispositif de contrôle 2 comprend une unité d'hybridation 3 configurée pour déterminer une deuxième cible de puissance P _{BP2*} à partir d'une mesure de la première puissance de distribution P_{BP}du premier convertisseur C1, d'une mesure de la deuxième puissance de distribution P_{HP}du deuxième convertisseur C2 et de la consigne de génération P_{ECU}.

De manière préférée, l'unité d'hybridation 3 permet de déterminer une cible alternative à la première cible de puissance P_{BP1*}.

En pratique, l'unité d'hybridation 3 compare la consigne de génération P_{ECU} avec les mesures de puissance P_{BP}, P_{HB} afin de déterminer la deuxième cible de puissance P_{BP2*} permettant d'atteindre la consigne de génération P_{ECU}. A titre d'exemple, si la consigne de génération P_{ECU} est une consigne de partage de puissance imposant que la première puissance de distribution P_{BP}corresponde à X% de la puissance totale et que la deuxième puissance de distribution P_{HP}corresponde à 100-X% de la puissance totale, la deuxième cible de puissance P_{BP2*} est adaptée pour atteindre le partage souhaité en tenant compte des mesures de puissance P_{BP}, P_{HB}.

La deuxième cible de puissance P_{BP2}* correspond à une cible de puissance par défaut qui permet de respecter la stratégie d'hybridation. La première cible de puissance P_{BP1}* est déterminée par la régulation de tension et correspond à une cible de secours en cas de dysfonctionnement de la deuxième voie d'alimentation V2. La deuxième cible de puissance P_{BP2}* est déterminée en boucle fermée, ce qui permet de garantir un partage en puissance précis entre les convertisseurs C1, C2.

Comme illustré à la [Fig.8], le dispositif de contrôle 2 comporte un bloc de détermination 31 configuré pour déterminer la première puissance P_{BP}et la deuxième puissance P_{HP}à partir de la mesure de l'intensité de distribution I_{DC1} du premier convertisseur C1, de la mesure de l'intensité de distribution I_{DC2} du deuxième convertisseur C2 et de la mesure de la tension de distribution V_{DC}.

De manière classique, chaque puissance P_{BP}, P_{HP}est calculée par multiplication de l'intensité de distribution I_{DC1}, I_{DC2} par la tension de distribution V_{DC}.

A cet effet, comme illustré à la [Fig.8], le bloc de détermination 31 comporte des capteurs d'intensité 8 en sortie des convertisseurs C1, C2. Cela permet une détermination réactive de la première puissance P_{BP}du premier convertisseur C1 et de la deuxième puissance P_{HP}du deuxième convertisseur C2.

Toujours en référence à la [Fig.7], le dispositif de contrôle 2 comprend une unité de sélection 4 configurée pour utiliser la première cible de puissance P_{BP1*} ou la deuxième cible de puissance P_{BP2*} comme première consigne de puissance P_{BP*} en fonction de l'état de fonctionnement des éléments du système de génération électrique 1, en particulier, celui de l'unité de distribution électrique S_{EDU} et du deuxième convertisseur S _{EC2}. De manière avantageuse, chaque état de fonctionnement peut être transmis via des signaux discrets (tout ou rien). Une transmission par discrets est rapide par comparaison à un bus.

De manière préférée, l'unité de sélection 4 est configurée pour sélectionner par défaut la deuxième cible de puissance P_{BP2*} de manière à mettre en œuvre la stratégie d'hybridation. Lorsqu'un état de fonctionnement indique un dysfonctionnement, l'unité de sélection 4 sélectionne la première cible de puissance P_{BP1*} au lieu de la deuxième cible de puissance P_{BP2*}. Ainsi, la première cible de puissance P_{BP1*} remplit une fonction de « secours » permettant au dispositif de contrôle 2 d'assurer, en toutes circonstances, une régulation de la tension.

Le dispositif de contrôle 2 selon l'invention possède avantageusement une architecture décentralisée qui permet en outre, en fonctionnement normal, d'assurer un partage de puissance précis en boucle fermée. Le dispositif de contrôle 2 permet avantageusement de se reconfigurer en cas de dysfonctionnement ou de disparition dudit dysfonctionnement. Le dispositif de contrôle 2 permet un contrôle asymétrique dans lequel la deuxième voie d'alimentation V2 est contrôlée de manière autonome, la première voie d'alimentation V1 s'adaptant à l'état de fonctionnement de la deuxième voie d'alimentation V2.

En référence à la [Fig.7], l'unité de sélection 4 est configurée pour utiliser la première cible de puissance P_{BP1*} en cas de détection d'un signal de non-qualité S_{QUA} de la tension de distribution V_{DC}. A cet effet, en référence à la [Fig.7], le dispositif de contrôle 2 comporte une unité d'hybridation de distribution 5 configurée pour comparer la mesure de la tension de distribution V_{DC} dans le temps à un gabarit de tension GAB. De manière connue, un gabarit de tension GAB détermine la plage nominale de variation autorisée de la tension de distribution V_{DC} ainsi que des plages exceptionnelles de variation pendant lesquelles la tension de distribution V_{DC} peut sortir de la plage nominale de variation pendant une durée maximale autorisée. En cas de non-respect du gabarit de tension GAB par la mesure de la tension de distribution V _{DC}, un signal de non-qualité S_{QUA} est émis par l'unité d'hybridation de distribution 5 pour utiliser la première cible de puissance P_{BP1*}. Ainsi, même si aucun dysfonctionnement de l'unité de distribution EDU n'a été détecté, l'unité d'hybridation de distribution 5 peut activer la cible de secours si la tension de distribution V_{DC} est dégradée. Le dispositif de contrôle 2 est ainsi plus performant.

Dans cet exemple, l'unité de sélection 4 est configurée pour utiliser la première cible de puissance P_{BP1*} ou la deuxième cible de puissance P_{BP2*}. L'unité de sélection peut également réaliser une sélection de la deuxième cible de puissance P_{BP2*} par réalisation d'une saturation de la première cible de puissance P_{BP1*} afin d'atteindre la deuxième cible de puissance P_{BP2*}.

Lorsque la deuxième cible de puissance P_{BP2*} est sélectionnée comme première consigne de puissance P_{BP*},la première unité de régulation 11 met en œuvre une fonction d'anti-saturation de l'intégrale connue sous sa désignation anglaise « anti-windup » afin de ne pas altérer la consigne de puissance P_{BP1*}.

Il est présenté dans cet exemple une application liée à la génération électrique mais l'invention s'applique plus généralement au domaine de l'hybridation dans lequel une machine électrique remplit, d'une part, une fonction de générateur pour prélever de la puissance mécanique sur l'arbre basse pression BP ou sur l'arbre haute pression HP et, d'autre part, une fonction de moteur pour injecter de la puissance mécanique sur l'arbre basse pression BP ou sur l'arbre haute pression HP. Pour une fonction moteur, chaque convertisseur C1, C2 peut également convertir la tension continue V_{DC} pour alimenter en courant alternatif respectivement les deux machines électriques G1, G2 afin d'injecter de la puissance.

Par souci de clarté et de concision, il n'est présenté que la fonction génératrice. Pour une fonction moteur, le calculateur ECU fournit une consigne d'injection P_{ECU} permettant de déterminer, par exemple, l'injection de puissance mécanique sur chaque arbre, etc. Le système d'hybridation est bidirectionnel pour permettre la génération de puissance électrique mais également l'injection de puissance mécanique.

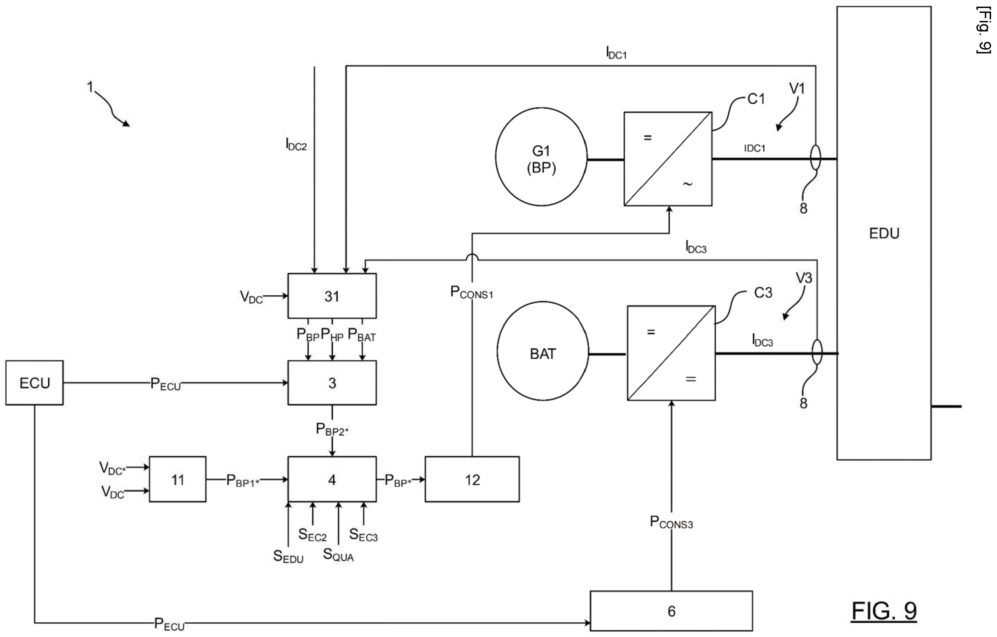

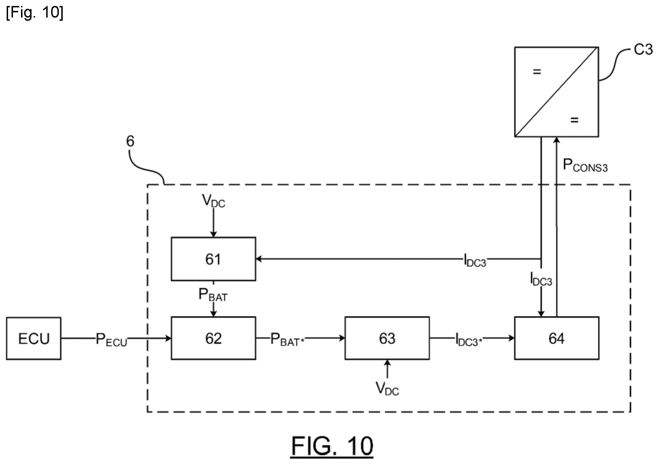

L'invention a été présentée pour un système de génération électrique 1 comprenant deux voies d'alimentation V1, V2 mais l'invention s'applique également en présence d'une ou plusieurs autres voies d'alimentation V3, en particulier une batterie électrique BAT, fournissant une troisième intensité de distribution I_{DC3} à l'unité de distribution électrique EDU comme illustré aux figures 9 et 10. Par souci de clarté, la deuxième voie d'alimentation V2 n'est pas représentée sur ces figures.

En référence à la [Fig.9], le système de génération électrique 1 comporte une batterie électrique BAT reliée électriquement à l'unité de distribution électrique EDU par un troisième convertisseur C3, ici du type continu/continu.

Le dispositif de contrôle 2 est configuré pour déterminer une troisième consigne de paramétrage P_{CONS3} pour le troisième convertisseurs C3. A cet effet, le dispositif de contrôle 2 comporte un module de contrôle 6 configuré pour déterminer la troisième consigne de paramétrage P_{CONS3} en fonction de la consigne de génération P_{ECU}. En référence à la [Fig.10], le module de contrôle 6 comporte :
- un premier bloc 61 configuré pour déterminer une mesure de la troisième puissance P_{BAT} à partir de la mesure de la troisième intensité de distribution I _{DC3} en sortie du troisième convertisseur C3 et de la mesure de la tension de distribution V_{DC},
- Un deuxième bloc 62 configuré pour déterminer une troisième consigne de puissance P_{BAT*}à partir de la troisième puissance P_{BAT} et de la consigne de génération P_{ECU},
- Un troisième bloc 63 configuré pour déterminer une troisième consigne d'intensité I_{DC3*}à partir de la troisième consigne de puissance P_{BAT*} et de la mesure de la tension de distribution V_{DC},
- Un quatrième bloc 64 configuré pour déterminer la troisième consigne de paramétrage P_{CONS3} à partir de la mesure de la troisième intensité de distribution I_{DC3} et de la troisième consigne d'intensité I_{DC3*}, de préférence, en formant une boucle de courant.

Le système de génération électrique 1 est ainsi échelonnable et permet de prendre en compte plus de deux sources de puissances alimentant l'unité de distribution électrique EDU.

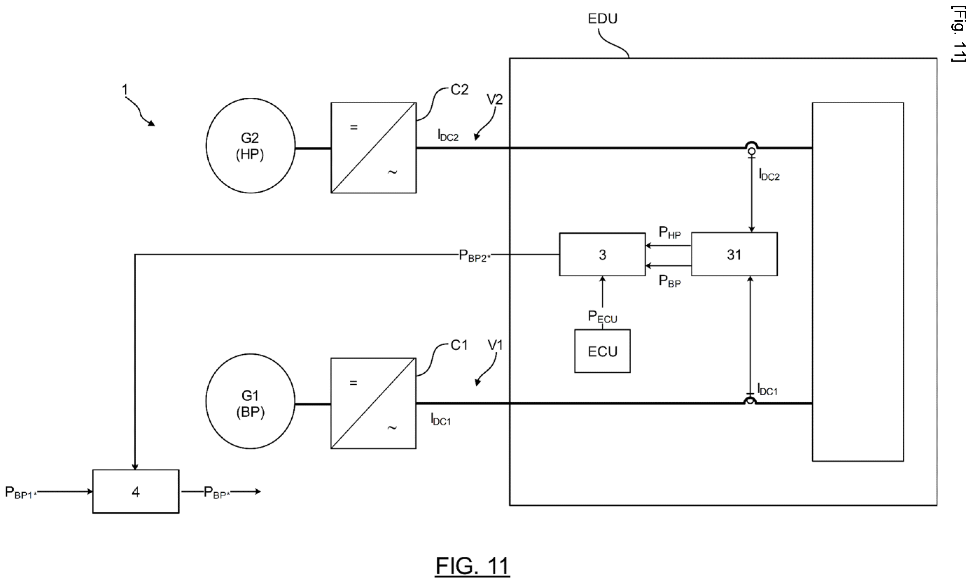

Dans la forme de réalisation de la [Fig.7], l'unité d'hybridation 3 a été représentée schématiquement de manière indépendante à l'unité de distribution électrique EDU. En référence à la [Fig.11], l'unité d'hybridation 3 est intégrée à l'unité de distribution électrique EDU de manière à optimiser les ressources de calcul. De préférence, le calculateur ECU déterminant la consigne de génération P_{ECU} est également intégré à l'unité de distribution électrique EDU, ce qui optimise encore plus les ressources de calcul. Cela permet avantageusement de former une unité de distribution électrique EDU remplissant sa fonction classique et fournissant en outre la deuxième cible de puissance P_{BP2*}.

## Revendications

1. Système de génération électrique (1) pour alimenter au moins un réseau électrique d'un aéronef (REA), l'aéronef comprenant au moins une turbomachine d'aéronef (T) comprenant un arbre basse pression (BP) et un arbre haute pression (HP) configurés pour être entraînés en rotation, le système de génération électrique (1) étant configuré pour recevoir une consigne de génération (P_{ECU}) définissant une stratégie d'hybridation, le système de génération électrique (1) comprenant :
- Une première voie d'alimentation (V1) comprenant :
- une première génératrice (G1) configurée pour générer un courant alternatif en prélevant de l'énergie mécanique sur un des arbres basse pression (BP) et haute pression (HP),
- Un premier convertisseur (C1), associé à la première génératrice (G1), pour convertir le courant alternatif généré en une première intensité de distribution (I_{DC1}) en fonction de son paramétrage, le premier convertisseur (C1) générant une première puissance (P_{BP}) qui est fonction d'une tension de distribution (V_{DC}),
- Une deuxième voie d'alimentation (V2) comprenant :
- Une deuxième génératrice (G2) configurée pour générer un courant alternatif en prélevant de l'énergie mécanique sur l'autre des arbres basse pression (BP) et haute pression (HP),
- Un deuxième convertisseur (C2), associé à la deuxième génératrice (G2), pour convertir le courant alternatif généré en une deuxième intensité de distribution (I_{DC2}) en fonction de son paramétrage, le deuxième convertisseur (C2) générant une deuxième puissance (P_{HP}) qui est fonction de la tension de distribution (V_{DC}),
- Un dispositif de contrôle (2) configuré pour déterminer une première consigne de paramétrage (P_{CONS1}) pour le premier convertisseur (C1) et une deuxième consigne de paramétrage (P_{CONS2}) pour le deuxième convertisseur (C2), le dispositif de contrôle (2) étant **caractérisé en ce qu'**il comprend :
- Une première unité de traitement (12) configurée pour déterminer une première consigne de paramétrage (P_{CONS1}) pour le premier convertisseur (C1) à partir d'une première consigne de puissance (P_{BP*}),
- Une deuxième unité de traitement (22) configurée pour déterminer une deuxième consigne de paramétrage (P_{CONS2}) pour le deuxième convertisseur (C2) à partir d'une deuxième consigne de puissance (P_{HP*}),
- Une première unité de régulation (11) configurée pour déterminer une première cible de puissance (P_{BP1*}) en fonction d'une consigne de tension de distribution (V_{DC*}) et d'une mesure de la tension de distribution (V_{DC}),
- Une deuxième unité de régulation (21) configurée pour déterminer la deuxième consigne de puissance (P_{HP*}) en fonction de la consigne de tension de distribution (V_{DC*}) et de la mesure de la tension de distribution (V_{DC}),
- Une unité d'hybridation (3) configurée pour déterminer une deuxième cible de puissance (P_{BP2*}) à partir d'une mesure de la première puissance (P_{BP}), d'une mesure de la deuxième puissance (P_{HP}) et de la consigne de génération (P_{ECU}),
- Une unité de sélection (4) configurée pour sélectionner par défaut la deuxième cible de puissance (P_{BP2*}) comme première consigne de puissance (P_{BP*}) et pour sélectionner la première cible de puissance (P_{BP1*}) comme première consigne de puissance (P_{BP*}) en cas de dysfonctionnement de l'alimentation électrique par le deuxième convertisseur (C2).

2. Système de génération électrique (1) selon la revendication 1, comprenant au moins un bloc de détermination (31) configuré pour déterminer la première puissance (P_{BP}) et la deuxième puissance (P_{HP}) à partir de la mesure de la première intensité de distribution (I_{DC1}), de la mesure de la deuxième intensité de distribution (I_{DC2}) et de la mesure de la tension de distribution (V_{DC}).

3. Système de génération électrique (1) selon l'une des revendications 1 à 2, dans lequel la consigne de génération (P_{ECU}) définit au moins un ratio de la première puissance (P_{BP}) sur la puissance totale générée.

4. Système de génération électrique (1) selon l'une des revendications 1 à 3, dans lequel l'unité d'hybridation (3) est configurée pour déterminer la deuxième cible de puissance (P_{BP2*}) en boucle fermée.

5. Système de génération électrique (1) selon l'une des revendications 1 à 4, comprenant au moins une unité de distribution électrique (EDU) alimentée par les convertisseurs (C1, C2) à la tension de distribution (V_{DC}).

6. Système de génération électrique (1) selon la revendication 5, dans lequel l'unité d'hybridation (3) appartient à l'unité de distribution électrique (EDU).

7. Système de génération électrique (1) selon l'une des revendications 1 à 6, comprenant :
- Au moins une troisième voie d'alimentation (V3) comprenant au moins un troisième convertisseur (C3), alimenté par une troisième source électrique (BAT), pour générer une troisième intensité de distribution (I_{DC3}) en fonction de son paramétrage, le troisième convertisseur (C3) générant une troisième puissance (P_{BAT}) qui est fonction de la tension de distribution (V_{DC}),
- L'unité d'hybridation (3) étant configurée pour déterminer la deuxième cible de puissance (P_{BP2*}) à partir d'une mesure de la première puissance (P_{BP}), d'une mesure de la deuxième puissance (P_{HP}), d'une mesure de la troisième puissance (P_{BAT}) et de la consigne de génération (P_{ECU}).

8. Système de génération électrique (1) selon la revendication 7, dans lequel l'unité de sélection (4) est configurée pour sélectionner par défaut la deuxième cible de puissance (P_{BP2*}) comme première consigne de puissance (P_{BP*}) et pour sélectionner la première cible de puissance (P_{BP1*}) comme première consigne de puissance (P_{BP*}) en cas de dysfonctionnement de l'alimentation électrique par le deuxième convertisseur (C2) et/ou le troisième convertisseur (C3).

9. Procédé de génération électrique pour alimenter au moins un réseau électrique d'un aéronef (REA) à partir d'un système de génération électrique (1) selon l'une des revendications 1 à 8, l'aéronef comprenant au moins une turbomachine d'aéronef (T) comprenant un arbre basse pression (BP) et un arbre haute pression (HP) configurés pour être entraînés en rotation, le procédé comportant des étapes consistant à :
- Recevoir une consigne de génération (P_{ECU}) définissant une stratégie d'hybridation,
- Déterminer une première consigne de paramétrage (P_{CONS1}) pour le premier convertisseur (C1) à partir d'une première consigne de puissance (P_{BP*}),
- Déterminer une deuxième consigne de paramétrage (P_{CONS2}) pour le deuxième convertisseur (C2) à partir d'une deuxième consigne de puissance (P_{HP*}),
- Déterminer une première cible de puissance (P_{BP1*}) en fonction d'une consigne de tension de distribution (V_{DC*}) et d'une mesure de la tension de distribution (V_{DC}),
- Déterminer la deuxième consigne de puissance (P_{HP*}) en fonction de la consigne de tension de distribution (V_{DC*}) et de la mesure de la tension de distribution (V_{DC}),
- Déterminer une deuxième cible de puissance (P_{BP2*}) à partir d'une mesure de la première puissance (P_{BP}), d'une mesure de la deuxième puissance (P_{HP}) et de la consigne de génération (P_{ECU}),
- Sélectionner par défaut la deuxième cible de puissance (P_{BP2*}) comme première consigne de puissance (P_{BP*}) et sélectionner la première cible de puissance (P_{BP1*}) comme première consigne de puissance (P_{BP*}) en cas de dysfonctionnement de l'alimentation électrique par le deuxième convertisseur (C2).

10. Produit de type programme d'ordinateur, comprenant au moins une séquence d'instructions stockée et lisible par un processeur et qui, une fois lue par ce processeur, provoque la réalisation des étapes du procédé de la revendication 9.

## Patentansprüche

1. Stromerzeugungssystem (1) zur Versorgung mindestens eines elektrischen Netzes eines Luftfahrzeugs (REA), wobei das Luftfahrzeug mindestens eine Luftfahrzeug-Turbomaschine (T) umfasst, die eine Niederdruckwelle (BP) und eine Hochdruckwelle (HP) umfasst, die so konfiguriert sind, dass sie in Drehung versetzt werden können, wobei das Stromerzeugungssystem (1) so konfiguriert ist, dass es einen Erzeugungssollwert (P_{ECU}) empfangen kann, der eine Hybridisierungsstrategie definiert, wobei das Stromerzeugungssystem (1) umfasst:
- einen ersten Versorgungszweig (V1), der umfasst:
- einen ersten Generator (G1), der so konfiguriert ist, dass er Wechselstrom erzeugt, indem er mechanische Energie entweder von der Niederdruckwelle (BP) oder von der Hochdruckwelle (HP) entnimmt,
- einen ersten Umrichter (C1), der dem ersten Generator (G1) zugeordnet ist, um den erzeugten Wechselstrom entsprechend seiner Parametrierung in einen ersten Verteilungsstrom (I_{DC1}) umzuwandeln, wobei der erste Umrichter (C1) eine erste Leistung (P_{BP}) erzeugt, die von einer Verteilungsspannung (V_{DC}) abhängt,
- einen zweiten Versorgungszweig (V2), der umfasst:
- einen zweiten Generator (G2), der so konfiguriert ist, dass er Wechselstrom erzeugt, indem er mechanische Energie entweder von der Niederdruckwelle (BP) oder von der Hochdruckwelle (HP) entnimmt,
- einen zweiten Umrichter (C2), der dem zweiten Generator (G2) zugeordnet ist, um den erzeugten Wechselstrom entsprechend seiner Parametrierung in einen zweiten Verteilungsstrom (I_{DC2}) umzuwandeln, wobei der zweite Umrichter (C2) eine zweite Leistung (P_{HP}) erzeugt, die von einer Verteilungsspannung (V_{DC}) abhängt,
- eine Steuervorrichtung (2), die so konfiguriert ist, dass sie einen ersten Parametrierungssollwert (P_{CONS1}) für den ersten Umrichter (C1) und einen zweiten Parametrierungssollwert (P_{CONS2}) für den zweiten Umrichter (C2) ermittelt, wobei die Steuervorrichtung (2) **dadurch gekennzeichnet ist, dass** sie umfasst:
- eine erste Verarbeitungseinheit (12), die so konfiguriert ist, dass sie einen ersten Parametrierungssollwert (P_{CONS1}) für den ersten Umrichter (C1) anhand eines ersten Leistungssollwerts (P_{BP*}) ermittelt,
- eine zweite Verarbeitungseinheit (22), die so konfiguriert ist, dass sie einen zweiten Parametrierungssollwert (P_{CONS2}) für den zweiten Umrichter (C2) anhand eines zweiten Leistungssollwerts (P_{HP*}) ermittelt,
- eine erste Regeleinheit (11), die so konfiguriert ist, dass sie einen ersten Leistungszielwert (P_{BP1*}) in Abhängigkeit von einem Verteilerspannungs-Sollwert (V_{DC*}) und einem Messwert der Verteilerspannung (V_{DC}) ermittelt,
- eine zweite Regeleinheit (21), die so konfiguriert ist, dass sie den zweiten Leistungssollwert (P_{HP*}) in Abhängigkeit von dem Verteilerspannungs-Sollwert (V_{DC*}) und dem Messwert der Verteilerspannung (V_{DC}) ermittelt,
- eine Hybridisierungseinheit (3), die so konfiguriert ist, dass sie einen zweiten Leistungszielwert (P_{BP2*}) anhand eines Messwerts der ersten Leistung (P_{BP}), einem Messwert der zweiten Leistung (P_{HP}) und dem Erzeugungssollwert (P_{ECU}) ermittelt,
- eine Auswahleinheit (4), die so konfiguriert ist, dass sie standardmäßig den zweiten Leistungszielwert (P_{BP2*}) als ersten Leistungssollwert (P_{BP*}) auswählt und den ersten Leistungszielwert (P_{BP1*}) als ersten Leistungssollwert (P_{BP*}) auswählt, falls eine Störung der Stromversorgung durch den zweiten Umrichter (C2) auftritt.

2. Stromerzeugungssystem (1) nach Anspruch 1, umfassend mindestens einen Bestimmungsblock (31), der so konfiguriert ist, dass er die erste Leistung (P_{BP}) und die zweite Leistung (P_{HP}) anhand des Messwerts des ersten Verteilungsstroms (I_{DC1}), des Messwerts des zweiten Verteilungsstroms (I_{DC2}) und des Messwerts der Verteilungsspannung (V_{DC}) ermittelt.

3. Stromerzeugungssystem (1) nach einem der Ansprüche 1 bis 2, wobei der Erzeugungssollwert (P_{ECU}) mindestens ein Verhältnis der ersten Leistung (P_{BP}) zu der gesamten erzeugten Leistung definiert.

4. Stromerzeugungssystem (1) nach einem der Ansprüche 1 bis 3, wobei die Hybridisierungseinheit (3) so konfiguriert ist, dass sie den zweiten Leistungssollwert (P_{BP2*}) in einem geschlossenen Regelkreis ermittelt.

5. Stromerzeugungssystem (1) nach einem der Ansprüche 1 bis 4, umfassend mindestens eine Stromverteilungseinheit (EDU), die von den Umrichtern (C1, C2) mit der Verteilungsspannung (V_{DC}) versorgt wird.

6. Stromerzeugungssystem (1) nach Anspruch 5, wobei die Hybridisierungseinheit (3) zu der elektrischen Verteilungseinheit (EDU) gehört.

7. Stromerzeugungssystem (1) nach einem der Ansprüche 1 bis 6, umfassend:
- mindestens einen dritten Versorgungszweig (V3), der mindestens einen dritten Umrichter (C3) umfasst, der von einer dritten Stromquelle (BAT) versorgt wird, um einen dritten Verteilungsstrom (I_{DC3}) entsprechend seiner Parametrierung zu erzeugen, wobei der dritte Umrichter (C3) eine dritte Leistung (P_{BAT}) erzeugt, die von der Verteilerspannung (V_{DC}) abhängt,
- wobei die Hybridisierungseinheit (3) so konfiguriert ist, dass sie das zweite Leistungsziel (P_{BP2*}) anhand einer Messung der ersten Leistung (P_{BP}), einer Messung der zweiten Leistung (P_{HP}), einer Messung der dritten Leistung (P_{BAT}) und des Erzeugungssollwerts (P_{ECU}) ermittelt.

8. Stromerzeugungssystem (1) nach Anspruch 7, wobei die Auswahleinheit (4) so konfiguriert ist, dass sie standardmäßig den zweiten Leistungssollwert (P_{BP2*}) als ersten Leistungssollwert (P_{BP*}) auswählt und den ersten Leistungssollwert (P_{BP1*}) als ersten Leistungssollwert (P_{BP*}) auswählt, falls eine Störung der Stromversorgung durch den zweiten Umrichter (C2) und/oder den dritten Umrichter (C3) auftritt.

9. Stromerzeugungsverfahren zur Versorgung mindestens eines elektrischen Netzes eines Luftfahrzeugs (REA) anhand eines Stromerzeugungssystems (1) nach einem der Ansprüche 1 bis 8, wobei das Luftfahrzeug mindestens eine Luftfahrzeug-Turbomaschine (T) umfasst, die eine Niederdruckwelle (BP) und eine Hochdruckwelle (HP) umfasst, die so konfiguriert sind, dass sie in Drehung versetzt werden können, wobei das Verfahren folgende Schritte umfasst:
- Empfangen eines Erzeugungssollwerts (P_{ECU}), der eine Hybridisierungsstrategie definiert,
- Ermitteln eines ersten Paramatrierungssollwerts (P_{CONS1}) für den ersten Umrichter (C1) ausgehend von einem ersten Leistungssollwert (P_{BP*}),
- Ermitteln eines zweiten Parametrierungssollwerts (P_{CONS2}) für den zweiten Umrichter (C2) ausgehend von einem zweiten Leistungssollwert (P_{HP*}),
- Ermitteln eines ersten Leistungszielwerts (P_{BP1*}) in Abhängigkeit von einem Verteilerspannungs-Sollwert (V_{DC*}) und einem Messwert der Verteilerspannung (V_{DC}),
- Ermitteln des zweiten Leistungssollwerts (P_{HP*}) in Abhängigkeit von dem Verteilerspannungs-Sollwert (V_{DC*}) und dem Messwert der Verteilerspannung (V_{DC}),
- Ermitteln eines zweiten Leistungsziels (P_{BP2*}) anhand eines Messwerts der ersten Leistung (P_{BP}), eines Messwerts der zweiten Leistung (P_{HP}) und des Erzeugungssollwerts (P_{ECU}),
- standardmäßig Auswählen des zweiten Leistungszielwerts (P_{BP2*}) als ersten Leistungssollwert (P_{BP*}) und des ersten Leistungszielwerts (P_{BP1*}) als ersten Leistungssollwert (P_{BP*}), falls eine Störung der Stromversorgung durch den zweiten Umrichter (C2) auftritt.

10. Computerprogrammprodukt, das mindestens eine von einem Prozessor gespeicherte und lesbare Befehlsfolge umfasst, die, sobald sie von diesem Prozessor gelesen wird, die Durchführung der Schritte des Verfahrens nach Anspruch 9 bewirkt.

## Claims

1. An electrical generation system (1) for powering at least one electrical network (REA) of an aircraft, the aircraft comprising at least one aircraft turbomachine (T) comprising a low-pressure shaft (BP) and a high-pressure shaft (HP) configured to be driven in rotation, the electrical generation system (1) being configured to receive a generation setpoint (P_{ECU}) defining a hybridization strategy, the electrical generation system (1) comprising:
- A first power channel (V1) comprising:
∘ a first generator (G1) configured to generate an alternating current by drawing mechanical energy from one of the low-pressure (BP) and high-pressure (HP) shafts,
∘ A first converter (C1), associated with the first generator (G1), for converting the alternating current generated into a first distribution current (I_{DC1}) as a function of its parameterization, the first converter (C1) generating a first power (P_{BP}) which is a function of a distribution voltage (V_{DC}).
- A second power channel (V2) comprising:
∘ A second generator (G2) configured to generate an alternating current by drawing mechanical energy from the other of the low-pressure (BP) and high-pressure (HP) shafts,
∘ A second converter (C2), associated with the second generator (G2), for converting the alternating current generated into a second distribution current (I_{DC2}) as a function of its parameterization, the second converter (C2) generating a second power (P_{HP}) which is a function of the distribution voltage (V_{DC}),
- A control device (2) configured to determine a first parametrization setpoint (P_{CONS1}) for the first converter (C1) and a second parameterization setpoint (P_{CONS2}) for the second converter (C2), the control device (2) being **characterized in that** it comprises:
∘ A first processing unit (12) configured to determine a first parameterization setpoint (P_{CONS1}) for the first converter (C1) from a first power setpoint (P_{BP*}),
∘ A second processing unit (22) configured to determine a second parameterization setpoint (P_{CONS2}) for the second converter (C2) from a second power setpoint (P_{HP*}),
∘ A first regulation unit (11) configured to determine a first power target (P_{BP1*}) as a function of a distribution voltage setpoint (V_{DC*}) and a measurement of the distribution voltage (V_{DC}),
∘ A second regulation unit (21) configured to determine the second power setpoint (P_{HP*}) as a function of the distribution voltage setpoint (V_{DC*}) and the measurement of the distribution voltage (V_{DC}),
∘ A hybridization unit (3) configured to determine a second power target (P_{BP2*}) from a measurement of the first power (P_{BP}), a measurement of the second power (P_{HB}) and the generation setpoint (P_{ECU}),
∘ A selection unit (4) configured to select by default the second power target (P_{BP2*}) as the first power setpoint (P_{BP*}) and to select the first power target (P_{BP1*}) as the first power setpoint (P_{BP*}) in the event of malfunction of the electrical power by the second converter (C2).

2. The electrical generation system (1) according to claim 1, comprising at least one determination block (31) configured to determine the first power (P_{BP}) and the second power (P_{HP}) from the measurement of the first distribution current (I_{DC1}), from the measurement of the second distribution current (I_{DC2}) and from the measurement of the distribution voltage (V_{DC}).

3. The electrical generation system (1) according to one of claims 1 to 2, wherein the generation setpoint (P_{ECU}) defines at least one ratio of the first power (P_{BP}) to the total power generated.

4. The electrical generation system (1) according to one of claims 1 to 3, wherein the hybridization unit (3) is configured to determine the second power target (P_{BP2*}) in a closed loop.

5. The electrical generation system (1) according to one of claims 1 to 4, comprising at least one electrical distribution unit (EDU) powered by the converters (C1, C2) at the distribution voltage (V_{DC}).

6. The electrical generation system (1) according to claim 5, wherein the hybridization unit (3) belongs to the electrical distribution unit (EDU).

7. The electrical generation system (1) according to one of claims 1 to 6, comprising:
- At least one third power channel (V3) comprising at least one third converter (C3), powered by a third electrical source (BAT), for generating a third distribution current (I_{DC3}) as a function of its parameterization, the third converter (C3) generating a third power (P_{BAT}) which is a function of the distribution voltage (V_{DC}).
- The hybridization unit (3) being configured to determine the second power target (P_{BP2*}) from a measurement of the first power (P_{BP}), from a measurement of the second power (P_{HP}), from a measurement of the third power (P_{BAT}) and the generation setpoint (P_{ECU}).

8. The electrical generation system (1) according to claim 7, wherein the selection unit (4) is configured to select by default the second power target (P_{BP2*}) as the first power setpoint (P_{BP*}) and to select the first power target (P_{BP1*}) as the first power setpoint (P_{BP*}) in the event of malfunction of the electrical power by the second converter (C2) and/or the third converter (C3).

9. An electrical generation method for powering at least one electrical network (REA) of an aircraft from an electrical generation system (1) according to one of claims 1 to 8, the aircraft comprising at least one aircraft turbomachine (T) comprising a low-pressure shaft (BP) and a high-pressure shaft (HP) configured so as to be driven in rotation, the method comprising steps consisting in:
- Receiving a generation setpoint (P_{ECU}) defining a hybridization strategy,
- Determining a first parameterization setpoint (P_{CONS1}) for the first converter (C1) from a first power setpoint (P_{BP*}),
- Determining a second parameterization setpoint (P_{CONS2}) for the second converter (C2) from a second power setpoint (P_{HP*}),
- Determining a first power target (P_{BP1*}) as a function of a distribution voltage setpoint (V_{DC*}) and a measurement of the distribution voltage (V_{DC}),
- Determining the second power setpoint (P_{HP*}) as a function of the distribution voltage setpoint (V_{DC*}) and of the distribution voltage measurement (V_{DC}),
- Determining a second power target (P_{BP2*}) from a measurement of the first power (P_{BP}), from a measurement of the second power (P_{HP}) and from the generation setpoint (P_{ECU}),
- Selecting the second power target (P_{BP2*}) as the first power setpoint (P_{BP*}) by default and selecting the first power target (P_{BP1*}) as the first power setpoint (P_{BP*}) in case of a malfunction of the electrical power from the second converter (C2).

10. A product of the computer program type, comprising at least one sequence of instructions stored and readable by a processor and which, once read by this processor, causes the steps of the method of claim 9 to be carried out.
